# EUROPEAN PATENT APPLICATION

(11) **EP 3 448 113 A1**
(43) Date of publication of application: **27.02.2019**
(21) Application number: 17785313.2
(22) Date of filing: 29.03.2017
(51) Int. Cl.: H04W 76/02

(54) **METHOD AND DEVICE FOR DUAL CONNECTION OPERATION, AND COMPUTER STORAGE MEDIUM**

(30) Priority: 20.04.2016 CN 201610248493
(71) Applicant: ZTE Corporation, Shenzhen, Guangdong 518057 (CN)
(72) Inventor: FANG, Jianmin, Shenzhen, Guangdong 518057 (CN)
(74) Representative: Lavoix
(86) International application number: PCT/CN2017/078663
(87) International publication number: WO 2017/181828

(57) **Abstract**

Disclosed are a method and device for a dual connection operation, and a computer storage medium. The method comprises: a master base station sending, to a secondary base station, a request message for identity exchange between the master base station and the secondary station; the master base station receiving a confirmation message from the secondary base station, and then sending a radio resource control protocol connection reconfiguration message to a UE, wherein the radio resource control protocol connection reconfiguration message carries instruction information about the identity exchange between the master base station and the secondary base station.

## Description

### TECHNICAL FIELD

The application relates, but is not limited, to the field of communication technologies, and in particular to a method and device for dual connection operation and a computer storage medium.

### BACKGROUND

A long term evolution (LTE for short) network includes an evolved universal terrestrial radio access network (E-UTRAN for short) and a corresponding core network (CN for short). The E-UTRAN includes an evolved node B (eNB for short). The CN includes a mobile management entity (MME for short) and a serving gateway (S-GW for short). The eNB and the CN are connected through an S1 interface, and the eNB may be connected through an X2 interface. One eNB may manage one or more cells (Cell). An interface between a user equipment (UE for short) and the cell is named as a Uu interface (or named as an air interface).

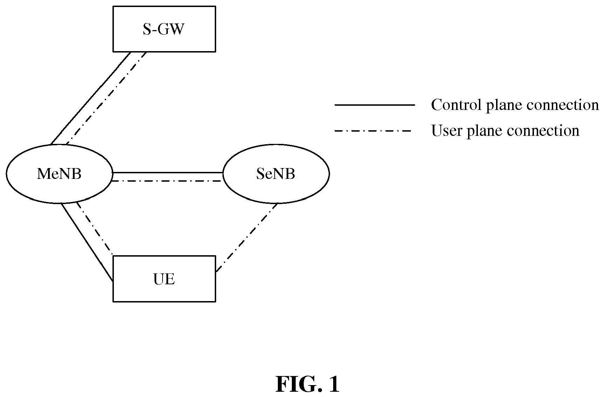

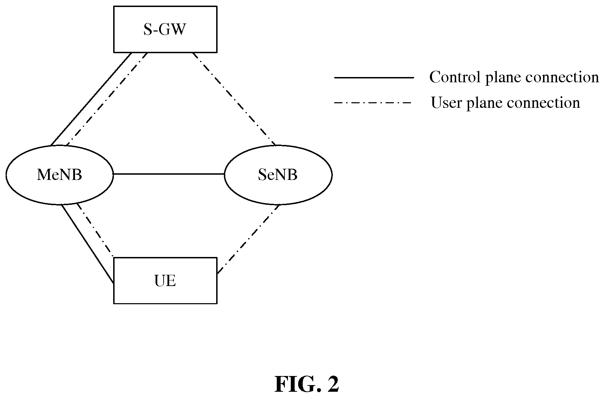

Because of deficiency of spectrum resources, and explosion of mass traffic businesses of a mobile user, requirements of using a high-frequency point, for example 3.5 GHz, to perform hot point coverage are apparent gradually. Signal attenuation of the high-frequency point is large, a coverage range of the cell is small, a base station using a low-power small cell becomes a new application scene. In order to enhance the mobility performance of the small cell deployed network and increasing a user throughput, a new enhancement scheme is introduced and named as a dual connectivity (DC for short). In the dual connectivity, a terminal may simultaneously keep connection with two base stations, herein one base station is named as a master eNB (MeNB for short), and the other base station is named as a secondary eNB (SeNB for short). In the dual connectivity, the MeNB is responsible for the control of the dual connectivity. A data stream has two implementation modes: a split bearer mode and a master/secondary cell group bearer (MCG/SCG bearer for short) mode. While the split bearer is used (as shown in FIG. 1), downstream data is flowed from the S-GW to the MeNB, and is branched at the MeNB, one stream is directly flowed to the UE, and the other stream is flowed to the UE through the SeNB. While the MCG/SCG bearer is used (as shown in FIG. 2), the downstream data sends two streams of the data from the S-GW, one stream is flowed to the UE through the MeNB, and the other stream is flowed to the UE through the SeNB.

An existing related technology may not realize lossless exchange of the MeNB and the SeNB in the dual connectivity.

### SUMMARY

The embodiment of the disclosure provides a dual connection (DC) operation method and device and a computer storage medium, so as to achieve lossless exchange of a master eNB (MeNB) and a secondary eNB (SeNB) while user equipment (UE) performs the DC operation.

A method for a DC operation includes the following operations:
an MeNB sends a request message for identity mutual exchange between the MeNB and an SeNB to the SeNB;
after the MeNB receives a acknowledge message from the SeNB, a radio resource control protocol connection reconfiguration message is sent to UE, the radio resource control protocol connection reconfiguration message carries instruction information about the identity mutual exchange between the MeNB and the SeNB.

In an implementation mode, the request message for the identity mutual exchange between the MeNB and the SeNB is a handover request message, the handover request message carries instruction information about identity mutual exchange between the MeNB and the SeNB, the acknowledge message is a handover request acknowledge message; or
the request message for the identity mutual exchange between the MeNB and the SeNB is a preset identity mutual exchange request message, the preset identity mutual exchange request message carries an X2 interface application protocol identifier of the UE at the MeNB side and an S1 interface application protocol identifier of the UE at the mobile management entity side corresponding to the MeNB, the acknowledge message is a preset identity mutual exchange request acknowledge message.

A device for a DC operation is applied to an MeNB, and includes:
a first sending module, configured to send a request message for identity mutual exchange between an MeNB and an SeNB to the SeNB;
a receiving module, configured to receive a acknowledge message from the SeNB;
a second sending module, configured to, after the receiving module receives the acknowledge message from the SeNB, send a radio resource control protocol connection reconfiguration message to UE, the radio resource control protocol connection reconfiguration message carries instruction information about the identity mutual exchange between the MeNB and the SeNB.

In an implementation mode, the request message for the identity mutual exchange between the MeNB and the SeNB is a handover request message, the handover request message carries instruction information about identity mutual exchange between the MeNB and the SeNB, the acknowledge message is a handover request acknowledge message; or
the request message for the identity mutual exchange between the MeNB and the SeNB is a preset identity mutual exchange request message, the preset identity mutual exchange request message carries an X2 interface application protocol identifier of the UE at the MeNB side and an S1 interface application protocol identifier of the UE at the mobile management entity side corresponding to the MeNB, the acknowledge message is a preset identity mutual exchange request acknowledge message.

A method for a DC operation includes the following operations:
UE receives a radio resource control protocol connection reconfiguration message, the radio resource control protocol connection reconfiguration message carries instruction information about identity mutual exchange between an MeNB and an SeNB;
the UE performs identity mutual exchange processing of the MeNB and the SeNB; and
the UE sends a radio resource control protocol connection reconfiguration completion message to the SeNB prior to the identity mutual exchange.

In an implementation mode, the UE performs identity mutual exchange processing of the MeNB and the SeNB, including:
control plane connection of an interface between the UE and a cell is converted from connection between the UE and the MeNB to the connection between the UE and the SeNB.

A device for a DC operation is applied to UE, and includes:
a receiving module, configured to receive a radio resource control protocol connection reconfiguration message, the radio resource control protocol connection reconfiguration message carries instruction information about the identity mutual exchange between an MeNB and an SeNB;
a processing module, configured to perform identity mutual exchange processing of the MeNB and the SeNB;
a sending module, configured to send a radio resource control protocol connection reconfiguration completion message to the SeNB prior to the identity mutual exchange.

In an implementation mode, the processing module performs the identity mutual exchange processing of the MeNB and the SeNB, including: control plane connection of an interface between the UE and a cell is converted from connection between the UE and the MeNB to the connection between the UE and the SeNB.

A method for a DC operation includes the following operations:
an SeNB receives a radio resource control protocol connection reconfiguration completion message from UE;
the SeNB sends a path switching request message to a mobile management entity, the path switching request message carries instruction information about identity mutual exchange between an MeNB and the SeNB.

In an implementation mode, the SeNB is an SeNB prior to the identity mutual exchange, after the SeNB receives the radio resource control protocol connection reconfiguration completion message from the UE, identity mutual exchange processing is performed.

A device for a DC operation is applied to an SeNB, and includes:
a receiving module, configured to receive a radio resource control protocol connection reconfiguration completion message from UE;
a sending module, configured to send a path switching request message to a mobile management entity, the path switching request message carries instruction information about identity mutual exchange between an MeNB and the SeNB.

In an implementation mode, the SeNB is an SeNB prior to the identity mutual exchange, after the receiving module receives the radio resource control protocol connection reconfiguration completion message from the UE, the SeNB performs identity mutual exchange processing.

A method for a DC operation includes the following operations:
a mobile management entity receives a path switching request message from an SeNB, the path switching request message carries instruction information about identity mutual exchange between an MeNB and the SeNB;
the mobile management entity performs identity mutual exchange processing of the MeNB and the SeNB; and
the mobile management entity sends a acknowledge message to the SeNB prior to the identity mutual exchange.

In an implementation mode, the mobile management entity performs identity mutual exchange processing of the MeNB and the SeNB, including:
control plane connection of an S1 interface of the UE is converted from connection between the mobile management entity and the MeNB to the connection between the mobile management entity and the SeNB.

In an implementation mode, the acknowledge message is a path switching request acknowledge message, or
the acknowledge message is a preset path switching request acknowledge message, the preset path switching request acknowledge message carries an S1 interface application protocol identifier of the UE at the mobile management entity side corresponding to the MeNB and an S1 interface application protocol identifier of the UE at the SeNB side.

A device for a DC operation is applied to a mobile management entity, and includes:
a receiving module, configured to receive a path switching request message from an SeNB, the path switching request message carries instruction information about identity mutual exchange between an MeNB and the SeNB;
a processing module, configured to perform identity mutual exchange processing of the MeNB and the SeNB; and
a sending module, configured to send a acknowledge message to the SeNB prior to the identity mutual exchange.

In an implementation mode, the processing module performs the identity mutual exchange processing of the MeNB and the SeNB, including: control plane connection of an S1 interface of the UE is converted from connection between the mobile management entity and the MeNB to the connection between the mobile management entity and the SeNB.

In another aspect, the embodiment of the disclosure further provides a computer storage medium, the computer storage medium stores a computer program, the computer program is configured to execute the above method for the DC operation.

In conclusion, the embodiment of the disclosure provides a DC operation method and device and a computer storage medium, while UE performs the DC operation, lossless exchange of an MeNB and an SeNB may be realized.

### BRIEF DESCRIPTION OF THE DRAWINGS

FIG. 1 is a split bearer schematic diagram of a related technology;
FIG. 2 is a MCG/SCG bearer schematic diagram of a related technology;
FIG. 3 is a flow diagram of a first embodiment of the disclosure;
FIG. 4 is a flow diagram of a second embodiment of the disclosure;
FIG. 5 is a schematic diagram 1 of a device for a DC operation of the embodiment of the disclosure;
FIG. 6 is a schematic diagram 2 of a device for a DC operation of the embodiment of the disclosure;
FIG. 7 is a schematic diagram 3 of a device for a DC operation of the embodiment of the disclosure; and
FIG. 8 is a schematic diagram 4 of a device for a DC operation of the embodiment of the disclosure.

### DETAILED DESCRIPTION

While a signal of an MeNB is weaker and weaker, and a signal of an SeNB is better, if identities of the MeNB and the SeNB may be exchanged, it is beneficial to improve performance of dual connectivity. Because the MeNB is responsible for control of dual connectivity, if effect to UE is large because the UE disconnects with the MeNB, and identity mutual exchange of the MeNB and SeNB may be performed in time, the UE only loses connection with the SeNB, the effect to the UE is small.

So, how to realize the lossless exchange of the MeNB and SeNB in the dual connectivity is a technical problem to be solved by the application.

In order to make a purpose, a technical scheme and an advantage of the application more clear, the embodiments of the application is described in detail below in combination with the drawings. It is to be noted that the embodiments in the application and the features in the embodiment may be mutually and arbitrarily combined in the case without conflicting.

A method for a DC operation provided by the embodiment, for UE in the dual connectivity of the MCG/SCG bearer type, includes the following operations.

An MeNB initiates a request for identity mutual exchange between MeNB and SeNB (which may be implemented through carrying an instruction for identity mutual exchange between MeNB and SeNB in an existing HANDOVER REQUEST message or using a new request message for identity mutual exchange between MeNB and SeNB) to an SeNB.

After the MeNB receives a acknowledge message (an existing HANDOVER REQUEST ACKNOWLEGE message or a new request acknowledge message for identity mutual exchange between MeNB and SeNB) from the SeNB, the MeNB sends a RRC Connection Reconfiguration message to the UE, which carries an instruction for identity mutual exchange between the MeNB and SeNB.

After the UE receives the RRC Connection Reconfiguration message carrying the instruction for identity mutual exchange between MeNB and SeNB, the identity mutual exchange between MeNB and SeNB (including but not limited to: control plane connection of an Uu interface is converted from a connection between the UE and an eNB 1 to a connection between the UE and an eNB2) is performed at the UE side, and a RRC Connection Reconfiguration Complete message is sent to the SeNB.

After the SeNB receives the RRC Connection Reconfiguration Complete message, a path switching request (which may be implemented through carrying an instruction for identity mutual exchange between the MeNB and SeNB in an existing PATH SWITCH REQUEST message or using a new request message for path switching between MeNB and SeNB) is initiated to an MME.

After the MME receives the path switching request message from the SeNB, the identity mutual exchange between MeNB and SeNB (including but not limited to: control plane connection of an S1 interface of the UE is converted from the connection between the MME and the eNB 1 to the connection between the MME and the eNB2) is performed at the network side, and an acknowledge message (an existing PATH SWITCH REQUEST ACKNOWLEDGE message or a new request acknowledge message for path switching between MeNB and SeNB path) is sent to the SeNB.

For the UE in dual connectivity of the split bearer type, the MeNB firstly initiates an SeNB Modification process, the dual connectivity of the split bearer type is modified to the dual connectivity of the MCG/SCG bearer type, and the MeNB initiates a request for identity mutual exchange between the MeNB and SeNB to the SeNB.

By means of the method of the embodiment of the disclosure, while the UE performs the DC operation, the lossless exchange of the MeNB and the SeNB may be realized, so the performance of the dual connectivity is improved.

The method of the application is described in detail below in two embodiments.

### First Embodiment

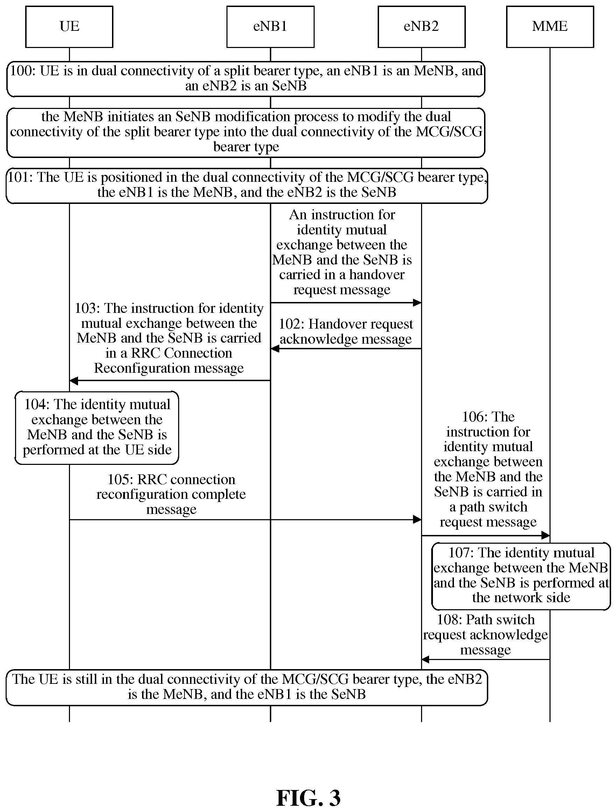

FIG. 3 is a flow diagram of the embodiment, as shown in FIG. 3, including the following operations 100 to 108.

In operation 100, UE is in dual connectivity of a split bearer type, an eNB1 is an MeNB, an eNB2 is an SeNB. The MeNB initiates an SeNB modification process (an existing process), the dual connectivity of the split bearer type is modified to the dual connectivity of the MCG/SCG bearer type.

In operation 101, the UE is in the dual connectivity of the MCG/SCG bearer type, the eNB1 is the MeNB, the eNB2 is the SeNB. According to a measuring report reported by the UE, the eNB 1 knows that a signal of the eNB 1 measured by the UE becomes weaker and weaker, and a signal of the eNB2 is better, the eNB 1 decides to trigger the identity mutual exchange between MeNB and SeNB for the UE. The eNB 1 sends a HANDOVER REQEUST message to the eNB2, which carries an instruction for identity mutual exchange between MeNB and SeNB.

In operation 102, the eNB2 receives the HANDOVER REQEUST message, and determines, according to the instruction of identity mutual exchange between MeNB and SeNB that is carried in the message, that this is a special handover request, a purpose of which is to implement the identity mutual exchange between the MeNB and SeNB for the UE. The eNB2 agrees with the request, original bearer of the UE in the eNB2 is maintained and is not changed, a HANDOVER REQUEST ACKNOWLEGE message is returned to the eNB1.

In operation 103, after receiving the HANDOVER REQUEST ACKNOWLEGE message, the eNB1 knows that the eNB2 agrees with the identity mutual exchange between MeNB and SeNB for the UE. The eNB1 sends a RRC Connection Reconfiguration message to the UE, which carries an instruction for identity mutual exchange between the MeNB and SeNB.

In operation 104, the UE receives the RRC Connection Reconfiguration message, and determines, according to the instruction for identity mutual exchange between MeNB and SeNB that is carried in the message, that this is a special reconfiguration request, a purpose of which is to implement the identity mutual exchange between MeNB and SeNB for the UE. The UE performs the identity mutual exchange between MeNB and SeNB (including but not limited to: the control plane connection of a Uu interface is converted from the connection between the UE and the eNB1 to the connection between the UE and the eNB2) at the UE side.

In operation 105, the UE sends a RRC Connection Reconfiguration Complete (RRC connection reconfiguration complete) message to the eNB2.

In operation 106, after receiving the RRC Connection Reconfiguration Complete message, the eNB2 sends, to an MME, a PATH SWITCH REQUEST message, which carries the instruction for identity mutual exchange between MeNB and SeNB.

In operation 107, the MME receives the PATH SWITCH REQUEST message, and determines, according to the instruction for identity mutual exchange between MeNB and SeNB that is carried in the message, that this is a special path switching request, a purpose of which is to implement the identity mutual exchange between MeNB and SeNB for the UE. The MME performs the identity mutual exchange between MeNB and SeNB (including but not limited to: the control plane connection of an S1 interface of the UE is converted from the connection between the MME and the eNB1 to the connection between the MME and the eNB2) at the network side.

In operation 108, the MME sends a PATH SWITCH REQUEST ACKNOWLEDGE (path switch request acknowledge) message to the eNB2. The UE is still in the dual connectivity of the MCG/SCG bearer type, the eNB2 is the MeNB, and the eNB1 is the SeNB.

### Second Embodiment

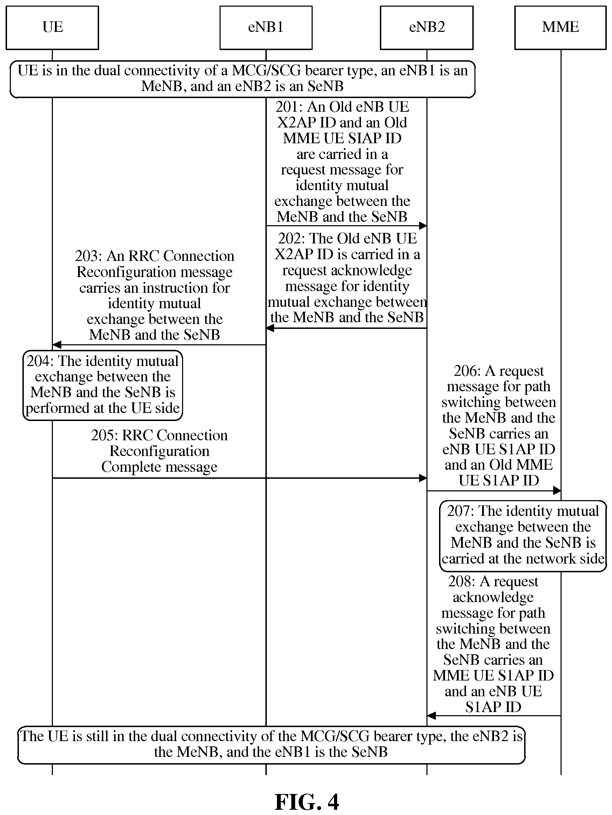

FIG. 4 is a flow diagram of the embodiment, as shown in FIG. 4, including the following operations 201 to 208.

In operation 201, UE is in the dual connectivity of a MCG/SCG bearer type, an eNB1 is an MeNB, an eNB2 is an SeNB. According to a measuring report reported by the UE, the eNB1 knows that a signal of the eNB1 measured by the UE becomes weaker and weaker, and a signal of the eNB2 is better, the eNB1 decides to trigger identity mutual exchange between the MeNB and SeNB for the UE. The eNB1 sends, to the eNB2, a request message for identity mutual exchange between MeNB and SeNB, which carries an Old eNB UE X2AP ID (an X2 interface application protocol identifier (ID) of the UE at the old eNB side, that is, an eNB UE X2AP ID of the UE at the eNB1 side), and an Old MME UE SIAP ID (an S1 interface application protocol ID of the UE at the old MME side, that is, an MME UE S1AP ID of the UE at the MME side corresponding to the eNB1).

In operation 202, upon reception of the request message for identity mutual exchange between MeNB and SeNB, the eNB2 knows that a purpose of the message is to implement the identity mutual exchange between MeNB and SeNB for the UE. The eNB2 agrees with the request, original bearer of the UE in the eNB2 is maintained and is not changed, returns a request acknowledge message for identity mutual exchange between MeNB and SeNB to the eNB1, which carries the Old eNB UE X2AP ID (the eNB UE X2AP ID of the UE at the eNB1 side).

In operation 203, upon reception of the request acknowledge message for identity mutual exchange between MeNB and SeNB, the eNB1 knows that the eNB2 agrees with the identity mutual exchange between MeNB and SeNB for the UE. The eNB1 sends a RRC Connection Reconfiguration message to the UE, which carries an instruction for identity mutual exchange between the MeNB and SeNB.

In operation 204, the UE receives the RRC Connection Reconfiguration message, and determines, according to the instruction for identity mutual exchange between MeNB and SeNB that is carried in the message, that this is a special reconfiguration request, a purpose of which is to implement the identity mutual exchange between MeNB and SeNB for the UE. The UE performs the identity mutual exchange between MeNB and SeNB (including but not limited to: the control plane connection of a Uu interface is converted from the connection between the UE and the eNB1 to the connection between the UE and the eNB2) at the UE side.

In operation 205, the UE sends a RRC Connection Reconfiguration Complete (RRC connection reconfiguration complete) message to the eNB2.

In operation 206, after the eNB2 receives the RRC Connection Reconfiguration Complete message, a request message for path switching between MeNB and SeNB is sent to an MME, an eNB UE S1AP ID (a eNB UE S1AP ID of the UE at the eNB2 side), and an Old MME UE S1AP ID (an MME UE S1AP ID of the UE at the MME side corresponding to the eNB1) are carried.

In operation 207, the MME receives the request message for path switching between MeNB and SeNB , it is known that a purpose of the message is to implement the identity mutual exchange between MeNB and SeNB for the UE. The MME performs the identity mutual exchange between MeNB and SeNB (including but not limited to: the control plane connection of the S1 interface of the UE is converted from the connection between the MME and the eNB 1 to the connection between the MME and the eNB2) at the network side.

In operation 208, the MME sends a request acknowledge message for path switching between MeNB and SeNB to the eNB2, an MME UE S1AP ID (the MME UE S1AP ID of the UE at the MME side corresponding to the eNB2), and an eNB UE S1AP ID (the eNB UE S1AP ID of the UE at the eNB2 side) are carried.

After that, the UE is still in the dual connectivity of the MCG/SCG bearer type, the eNB2 is the MeNB, and the eNB1 is the SeNB.

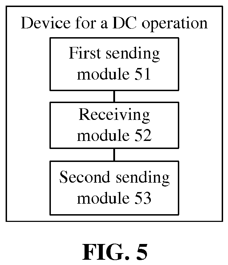

FIG. 5 is a schematic diagram 1 of a device for a DC operation of the embodiment of the disclosure, for UE in the dual connectivity of a MCG/SCG bearer type, the device is applied to an MeNB, as shown in FIG. 5, a base station of the embodiment includes a first sending module 51, a receiving module 52 and a second sending module 53.

The first sending module 51 is configured to send a request message for identity mutual exchange between the MeNB and an SeNB to the SeNB.

The receiving module 52 is configured to receive a acknowledge message from the SeNB.

The second sending module 53 is disposed, after the receiving module receives the acknowledge message from the SeNB, to send a radio resource control protocol connection reconfiguration message to UE, the radio resource control protocol connection reconfiguration message carries instruction information about the identity mutual exchange between the MeNB and the SeNB.

Herein, the request message for the identity mutual exchange between the MeNB and the SeNB is a handover request message, the handover request message carries instruction information about identity mutual exchange between the MeNB and the SeNB, the acknowledge message is a handover request acknowledge message; or
the request message for the identity mutual exchange between the MeNB and the SeNB is a preset identity mutual exchange request message, the preset identity mutual exchange request message carries an X2 interface application protocol identifier of the UE at the MeNB side and an S1 interface application protocol identifier of the UE at the mobile management entity side corresponding to the MeNB, the acknowledge message is a preset identity mutual exchange request acknowledge message.

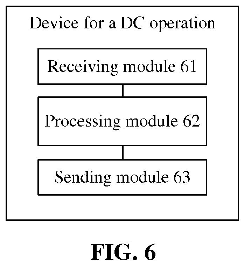

FIG. 6 is a schematic diagram 2 of a device for a DC operation of the embodiment of the disclosure, as shown in FIG. 6, UE of the embodiment is in the dual connectivity of a MCG/SCG bearer type, the device is applied to the UE, and includes a receiving module 61, a processing module 62 and a sending module 63.

The receiving module 61 is configured to receive a radio resource control protocol connection reconfiguration message, the radio resource control protocol connection reconfiguration message carries instruction information about the identity mutual exchange between an MeNB and an SeNB.

The processing module 62 is configured to perform identity mutual exchange processing of the MeNB and the SeNB.

The sending module 63 is configured to send a radio resource control protocol connection reconfiguration completion message to the SeNB prior to the identity mutual exchange.

Herein, the processing module 62 performs the identity mutual exchange processing of the MeNB and the SeNB, including: control plane connection of an interface between the UE and a cell is converted from connection between the UE and the MeNB to the connection between the UE and the SeNB.

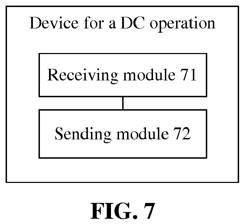

FIG. 7 is a schematic diagram 3 of a device for a DC operation of the embodiment of the disclosure, for UE in the dual connectivity of a MCG/SCG bearer type, the device is applied to an SeNB, as shown in FIG. 7, the base station of the embodiment includes a receiving module 71 and a sending module 72.

The receiving module 71 is configured to receive a radio resource control protocol connection reconfiguration completion message from the UE.

The sending module 72 is configured to send a path switching request message to a mobile management entity, the path switching request message carries instruction information about identity mutual exchange between an MeNB and the SeNB.

Herein, the SeNB is an SeNB prior to the identity mutual exchange, after the receiving module receives the radio resource control protocol connection reconfiguration completion message from the UE, the SeNB performs identity mutual exchange processing.

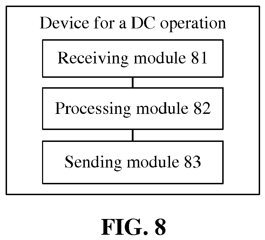

FIG. 8 is a schematic diagram 4 of a device for a DC operation of the embodiment of the disclosure, as shown in FIG. 8, the device of the embodiment, for UE in the dual connectivity of a MCG/SCG bearer type, is applied to an MME, and includes a receiving module 81, a processing module 82 and a sending module 83.

The receiving module 81 is configured to receive a path switching request message from an SeNB, the path switching request message carries instruction information about identity mutual exchange between an MeNB and the SeNB.

The processing module 82 is configured to perform identity mutual exchange processing of the MeNB and the SeNB.

The sending module 83 is configured to send a acknowledge message to the SeNB prior to the identity mutual exchange.

Herein, the processing module 82 performs the identity mutual exchange processing of the MeNB and the SeNB, including: control plane connection of an S1 interface of the UE is converted from connection between the mobile management entity and the MeNB to the connection between the mobile management entity and the SeNB.

In practical application, functions realized by each unit in the above device may be realized by a central processing unit (CPU), or a micro processor unit (MPU), or a digital signal processor (DSP), or a field programmable gate array (FPGA) and the like which are positioned in the device.

When being implemented in form of software function module and sold or used as an independent product, the above business signaling race device of the embodiment of the disclosure may also be stored in a computer-readable storage medium. Based on such an understanding, the technical solutions of the embodiments of the disclosure substantially or parts making contributions to the conventional art may be embodied in form of software product, and the computer software product is stored in a storage medium, including a plurality of instructions configured to enable a piece of computer equipment (which may be a personal computer, a server, network equipment or the like) to execute all or part of the method in each embodiment of the disclosure. The abovementioned storage medium includes: various media capable of storing program codes such as mobile storage equipment, a ROM, a RAM, a magnetic disk or an optical disk. So, the embodiment of the disclosure is not limited to any specific hardware and software combinations.

Correspondingly, the embodiment of the disclosure further provides a computer storage medium in which a computer program is stored, the computer program is configured to execute a method for a DC operation of the embodiment of the disclosure.

It may be understood by those of ordinary skill in the art that all or partial steps in the method may be completed by instructing related hardware through the program, the program may be stored in the computer readable storage medium, for example, the read only memory, the magnetic disk or the optical disk. Optionally, all or partial steps of the above embodiment may also be realized by using one or more integrated circuits. Correspondingly, each module/unit in the above embodiment may be realized by using a hardware form, or may be realized by using a form of a software function module. The disclosure is not limited to the combinations of the hardware and software in any specific forms.

The above are only the preferable embodiments of the disclosure, certainly, the disclosure may has other multiple embodiments, in the case without departing from the spirit of the disclosure and the essence thereof, those skilled in the art may make various corresponding modifications and variations according to the disclosure, but these corresponding modifications and variations fall within the scope of protection of the claims of the disclosure.

## Claims

1. A method for a dual connection, DC, operation, comprising:
sending, by a master base station, to a secondary base station, a request message for identity mutual exchange between the master and secondary base stations;
upon reception of a acknowledge message from the secondary base station, sending, by the master base station, a radio resource control protocol connection reconfiguration message to User Equipment, UE, the radio resource control protocol connection reconfiguration message carrying instruction information about the identity mutual exchange between the master and secondary base stations.

2. The method as claimed in claim 1, wherein
the request message for the identity mutual exchange between the master and secondary base stations is a handover request message, the handover request message carries instruction information about identity mutual exchange between the master and secondary base stations, and the acknowledge message is a handover request acknowledge message; or
the request message for the identity mutual exchange between the master and secondary base stations is a preset identity mutual exchange request message, the preset identity mutual exchange request message carries an X2 interface application protocol identifier of the UE at the master base station side and an S1 interface application protocol identifier of the UE at the mobile management entity side corresponding to the master base station, and the acknowledge message is a preset identity mutual exchange request acknowledge message.

3. A device for a dual connection, DC, operation, applied to a master base station, comprising:
a first sending module, configured to send, to a secondary base station, a request message for identity mutual exchange between a master base station and the secondary base station;
a receiving module, configured to receive a acknowledge message from the secondary base station;
a second sending module, configured to, after the receiving module receives the acknowledge message from the secondary base station, send a radio resource control protocol connection reconfiguration message to User Equipment, UE, the radio resource control protocol connection reconfiguration message carries instruction information about the identity mutual exchange between the master and secondary base stations.

4. The device as claimed in claim 3, wherein
the request message for the identity mutual exchange between the master and secondary base stations is a handover request message, the handover request message carries instruction information about identity mutual exchange between the master and secondary base stations, and the acknowledge message is a handover request acknowledge message; or
the request message for the identity mutual exchange between the master and secondary base stations is a preset identity mutual exchange request message, the preset identity mutual exchange request message carries an X2 interface application protocol identifier of the UE at the master base station side and an S1 interface application protocol identifier of the UE at the mobile management entity side corresponding to the master base station, and the acknowledge message is a preset identity mutual exchange request acknowledge message.

5. A method for a dual connection, DC, operation, comprising:
receiving, by User Equipment, UE, a radio resource control protocol connection reconfiguration message, the radio resource control protocol connection reconfiguration message carrying instruction information about identity mutual exchange between a master base station and a secondary base station;
performing, by the UE, identity mutual exchange processing of the master and secondary base stations; and
sending, by the UE, a radio resource control protocol connection reconfiguration completion message, to the secondary base station prior to the identity mutual exchange.

6. The method as claimed in claim 5, wherein performing, by the UE, identity mutual exchange processing of the master and secondary base stations comprises:
converting a control plane connection of an interface between the UE and a cell from a connection between the UE and the master base station to a connection between the UE and the secondary base station.

7. A device for a dual connection, DC, operation, applied to User Equipment, UE, the device comprising:
a receiving module, configured to receive a radio resource control protocol connection reconfiguration message, the radio resource control protocol connection reconfiguration message carries instruction information about the identity mutual exchange between a master base station and a secondary base station;
a processing module, configured to perform identity mutual exchange processing of the master and secondary base stations; and
a sending module, configured to send a radio resource control protocol connection reconfiguration completion message to the secondary base station prior to the identity mutual exchange.

8. The device as claimed in claim 7, wherein the processing module performs the identity mutual exchange processing of the master and secondary base stations, comprising: a control plane connection of an interface between the UE and a cell is converted from a connection between the UE and the master base station to a connection between the UE and the secondary base station.

9. A method for a dual connection, DC, operation, comprising:
receiving, by a secondary base station, a radio resource control protocol connection reconfiguration completion message from User Equipment, UE;
sending, by the secondary base station, a path switching request message, to a mobile management entity, wherein the path switching request message carries instruction information about identity mutual exchange between a master base station and the secondary base station.

10. The method as claimed in claim 9, wherein the secondary base station is a secondary base station prior to the identity mutual exchange, after the secondary base station receives the radio resource control protocol connection reconfiguration completion message from the UE, identity mutual exchange processing is performed.

11. A device for a dual connection, DC, operation, applied to a secondary base station, the device comprising:
a receiving module, configured to receive a radio resource control protocol connection reconfiguration completion message from User Equipment, UE;
a sending module, configured to send a path switching request message to a mobile management entity, the path switching request message carries instruction information about identity mutual exchange between a master base station and the secondary base station.

12. The device as claimed in claim 11, wherein the secondary base station is a secondary base station prior to the identity mutual exchange, after the receiving module receives the radio resource control protocol connection reconfiguration completion message from the UE, the secondary base station performs identity mutual exchange processing.

13. A method for a dual connection, DC, operation, comprising:
receiving, by a mobile management entity, a path switching request message from a secondary base station, wherein the path switching request message carries instruction information about identity mutual exchange between a master base station and the secondary base station;
performing, by the mobile management entity, identity mutual exchange processing of the master and secondary base stations; and
sending, by the mobile management entity, a acknowledge message, to the secondary base station prior to the identity mutual exchange.

14. The method as claimed in claim 13, wherein performing, by the mobile management entity, identity mutual exchange processing of the master and secondary base stations comprises:
converting a control plane connection of an S1 interface of User Equipment, UE, from a connection between the mobile management entity and the master base station to a connection between the mobile management entity and the secondary base station.

15. The method as claimed in claim 13 or 14, wherein
the acknowledge message is a path switching request acknowledge message, or
the acknowledge message is a preset path switching request acknowledge message, the preset path switching request acknowledge message carries an S1 interface application protocol identifier of the UE at the mobile management entity side corresponding to the master base station and an S1 interface application protocol identifier of the UE at the secondary base station side.

16. A device for a dual connection, DC, operation, applied to a mobile management entity, the device comprising:
a receiving module, configured to receive a path switching request message from a secondary base station, the path switching request message carries instruction information about identity mutual exchange between a master base station and the secondary base station;
a processing module, configured to perform identity mutual exchange processing of the master and secondary base stations; and
a sending module, configured to send a acknowledge message to the secondary base station prior to the identity mutual exchange.

17. The device as claimed in claim 16, wherein
the processing module performs the identity mutual exchange processing of the master and secondary base stations, comprising: a control plane connection of an S1 interface of User Equipment. UE, is converted from a connection between the mobile management entity and the master base station to a connection between the mobile management entity and the secondary base station.

18. A computer storage medium having stored therein a computer executable instruction configured to execute the method for a dual connection, DC, operation as claimed in any one of claims 1-2.

19. A computer storage medium having stored therein a computer executable instruction configured to execute the method for a dual connection, DC, operation as claimed in any one of claims 5-6.

20. A computer storage medium having stored therein a computer executable instruction configured to execute the method for a dual connection, DC, operation as claimed in any one of claims 9-10.

21. A computer storage medium having stored therein a computer executable instruction configured to execute the method for a dual connection, DC, operation as claimed in any one of claims 13-15.
